# NEUE EUROPÄISCHE PATENTSCHRIFT

(11) **EP 0 436 835 B2**
(45) Veröffentlichungstag und Bekanntmachung des Hinweises auf die Entscheidung über den Einspruch: **25.10.2000**
(45) Hinweis auf die Patenterteilung: 19.04.1995
(21) Anmeldenummer: 90123277.7
(22) Anmeldetag: 05.12.1990
(51) Int. Cl.: C01B 33/32

(54) **Verfahren zur Herstellung von kristallinen Natriumsilikaten**
Method for preparation of crystalline sodium silicates
Procédé de préparation de silicates de sodium cristallins

(30) Priorität: 12.01.1990 DE 4000705
(43) Veröffentlichungstag der Anmeldung: 17.07.1991
(73) Patentinhaber: Clariant GmbH, 65926 Frankfurt am Main (DE)
(72) Erfinder: Schimmel, Günther, Dr., D-5042 Erfstadt (DE); Kotzian, Michael, Dr., D-5042 Erfstadt (DE); Gradl, Reinhard, Dr., D-5042 Erfstadt (DE)

(56) Entgegenhaltungen:
- EP-A- 0 056 094
- EP-A- 0 293 640
- US-A- 4 585 642
- GLASTECHNISCHE BERICHTE, 37. Jahrgang, Heft 4, April 1964, Seiten 194-200, Frankfurt, DE; A. WILLGALLIS et al.: "Zur Polymorphie des Na2Si2O5"
- Shreve's chemical Process Industries 5th ed.
- Physics and Chemistry of Glasses 1966

## Beschreibung

Die vorliegende Erfindung betrifft ein Verfahren zur Herstellung von kristallinen Natriumsilikaten mit Schichtstruktur der Formel Na₂SiₓO₂ₓ₊₁, wobei x 2 oder 3 ist.

Aus der DE-A-37 18 350 ist bekannt, kristalline wasserfreie Natriumsilikate mit Schichtstruktur und einem Molverhältnis von SiO₂ zu Na₂O von (1,9 bis 3,5) : 1 dadurch zu gewinnen, daß man Wasserglaslösungen mit einem Feststoffgehalt von 20 bis 65 Gewichts-% in einer Sprühtrocknungszone unter Bildung eines wasserhaltigen amorphen Natriumsilikats behandelt, wobei das aus der Sprühtrocknungszone abströmende Abgas mindestens 140 °C heiß ist. Das wasserhaltige amorphe Natriumsilikat tempert man in einer Glühzone bei 500 bis 800 °C 1 bis 60 Minuten lang in Gegenwart von mindestens 10 Gewichts-% eines Rückgutes, welches durch mechanische Zerkleinerung von vorher aus der Glühzone ausgetragenem kristallinem Natriumsilikat erhalten wurde.

Nachteilig ist bei dem bekannten Verfahren, daß es energie- und investitionsaufwendig ist. So werden dabei hydrothermal hergestellte Wasserglaslösungen in zwei Schritten wieder vom Wasser befreit, wobei für den ersten Schritt, nämlich die Überführung der Wasserglaslösungen in Feststoffe, eine Sprühtrocknungseinrichtung erforderlich ist.

Aus der EP-A-56 094 ist ein Verfahren zur Herstellung von kristallinen Natriumsilikaten durch Erhitzen von Natriumcarbonat und Quarz auf erhöhte Temperaturen bekannt. Dabei werden Natriumcarbonat und Quarzpulver intensiv miteinander gemischt, die Mischung geschmolzen, die Schmelze in kurzer

Zeit abgekühlt und die erstarrte Masse vier bis neun Stunden bei Temperaturen zwischen 400 und 860 °C getempert. Nach dem Tempern wird das erhaltene Natriumsilikat vermahlen.

Es ist Aufgabe der vorliegenden Erfindung, ein Verfahren zur Herstellung von kristallinen Natriumsilikaten mit Schichtstruktur anzugeben, welches mit geringem Energieaufwand und mit einfachen Apparaten durchführbar ist.

Das wird erfindungsgemäß durch folgende Schritte erreicht:
a) Aufschmelzen von Sand und Soda in einem Molverhältnis von 2 bis 3,5 bei Temperaturen von 1200 bis 1400 °C;
b) Abkühlen der Schmelze unter Bildung von stückigem Wasserglas,
c) Aufmahlen des stückigen Wasserglases auf Teilchengrößen von weniger als 2 mm,
d) Behandeln des gemahlenen Wasserglases in einer langgestreckten Reaktionszone unter mechanischer Umwälzung während 10 bis 120 Minuten bei 600 bis 800 °C,
e) Mahlen des die Reaktionszone verlassenden Materials auf eine Kornfeinheit von weniger als 1 mm.

Das Verfahren gemäß der Erfindung kann weiterhin wahlweise auch noch dadurch ausgestaltet sein, daß man
a) dem aufgemahlenem Wasserglas 2 bis 30 Gewichts-%, bezogen auf die Menge des die Reaktionszone verlassenden Materials, Reaktionsprodukt mit einer Kornfeinheit von weniger als 1 mm hinzufügt,
b) das aufgemahlene Wasserglas in die Reaktionszone 45 bis 90 Minuten behandelt,
c) das aufgemahlene Wasserglas in der Reaktionszone bei Temperaturen von 700 bis 760 °C behandelt.

Das erfindungsgemäß durch Schmelzen von Sand und Soda im Molverhältnis SiO₂/Na₂O von 2 bis 3,5 anfallende Wasserglas liegt nach dem Erkalten der Schmelze in Stücken von etwa 5 cm Kantenlänge vor. Dieses Wasserglas ist röntgenamorph und unter normalen Bedingungen nur sehr langsam in Wasser löslich.

Gemäß der Erfindung wird das röntgenamorphe Wasserglas dadurch quantitativ in kristallines Natriumsilikat überführt, daß es feingemahlen unter mechanischer Bewegung thermisch behandelt wird, wodurch die äußere, bereits kristallisierte Schale eines jeden Kornes abgeschlagen wird und die benötigte Wärme mit hinreichender Geschwindigkeit in jedes Korn unter Fortführung der Kristallisation eindringen kann.

Das erfindungsgemäße Hinzufügen von feingemahlenem Reaktionsprodukt (Rückgut) zu dem aufgemahlenem Wasserglas in die Reaktionszone bewirkt eine Erhöhung der Kristallisationsgeschwindigkeit und verhindert ein Verbacken des aufgemahlenen Wasserglases während der Temperaturbehandlung.

Die Aufmahlung des stückigen Wasserglases erfolgt vorteilhafterweise mit einer robusten, langsam laufenden Schlägermühle, beispielsweise einer Hammermühle mit Siebeinsatz. Die Feinmahlung des Reaktionsproduktes kann mit Hilfe einer Schwingmühle, einer Kugelmühle oder einer Luftstrahlmühle durchgeführt werden.

### Beispiel 1

121 kg Sand (99 % SiO₂) und 106 kg Soda (Molverhältnis SiO₂/Na₂O = 2) wurden in einem Wannenofen aufgeschmolzen und die Wasserglas-Schmelze bei 1300 °C in flache Metallformen vergossen. Die erkaltete Schmelze zerbarst in Stücke von etwa 5 cm Kantenlänge. Die Stücke wurden in einer mit 2100 Upm laufenden Hammermühle auf Korngrößen unter 2 mm aufgemahlen und in einem rotierenden Drehrohrofen bei ca. 750 °C behandelt, wobei sich schwache Verklebungen an der Ofenwand ausbildeten. Schließlich wurde das aus dem Drehrohrofen austretende Material auf eine Kornfeinheit von weniger als 1 mm aufgemahlen.

Röntgenographisch wurde ermittelt, daß das Material überwiegend aus α-Na₂Si₂O₅ bestand und wenig δ -Na₂Si₂O₅ enthielt.

### Beispiel 2

Beispiel 1 wurde mit der Änderung wiederholt, daß dem aufgemahlenen Wasserglas beim Eintritt in den Drehrohrofen 20 kg Rückgut (11 Gewichts-%) mit einer Kornfeinheit von weniger als 1 mm hinzugefügt wurden. Dadurch kam es an der Innenwandung des Drehrohrofens zu keinerlei Anbackungen.

Das resultierende Material bestand ebenfalls überwiegend aus α-Na₂Si₂O₅ und enthielt wenig δ-Na₂Si₂O₅; es wies aber eine höhere Kristallinität als das nach Beispiel 1 erhaltene Material auf.

### Beispiel 3

Beispiel 1 wurde mit den Abänderungen wiederholt, daß 192 kg Sand mit 106 kg Soda (Molverhältnis SiO₂/Na₂O = 3,2) aufgeschmolzen wurden und daß die Behandlung im Drehrohrofen bei 710 °C erfolgte.
Röntgenographisch wurde ermittelt, daß das Material weitgehend aus Na₂Si₃O₇ mit geringen Anteilen SiO₂ bestand.

## Patentansprüche

1. Verfahren zur Herstellung von kristallinen Natriumsilikaten mit Schichtstruktur der Formel Na₂SiₓO₂ₓ₊₁, wobei x 2 oder 3 ist, umfassend die Schritte:
a) Aufschmelzen von Sand und Soda in einem Molverhältnis von 2 bis 3,5 bei Temperaturen von 1200 bis 1400 °C;
b) Abkühlen der Schmelze unter Bildung von stückigem Wasserglas,
c) Aufmahlen des stückigen Wasserglases auf Teilchengrößen von weniger als 2 mm,
d) Behandeln des gemahlenen Wasserglases in einer langgestreckten Reaktionszone unter mechanischer Umwälzung während 10 bis 120 Minuten bei 600 bis 800 °C,
e) Mahlen des die Reaktionszone verlassenden Materials auf eine Kornfeinheit von weniger als 1 mm.

2. Verfahren nach Anspruch 1, dadurch gekennzeichnet, daß man dem aufgemahlenen Wasserglas 2 bis 30 Gewichts-%, bezogen auf die Menge des die Reaktionszone verlassenden Materials, Reaktionsprodukt mit einer Kornfeinheit von weniger als 1 mm hinzufügt.

3. Verfahren nach Anspruch 1 oder 2, dadurch gekennzeichnet, daß man das aufgemahlene Wasserglas in der Reaktionszone 45 bis 90 Minuten behandelt.

4. Verfahren nach mindestens einem der Ansprüche 1 bis 3, dadurch gekennzeichnet, daß man das aufgemahlene Wasserglas in der Reaktionszone bei Temperaturen von 700 bis 760 °C behandelt.

## Claims

1. A process for the preparation of a crystalline sodium silicate having a layer structure and the formula Na₂SiₓO₂ₓ₊₁, in which x is 2 or 3, comprising the steps of:
a) fusing sand and soda in a molar ratio of 2 to 3.5 at temperatures of 1200 to 1400°C,
b) cooling the melt with the formation of pieces of water-glass,
c) grinding the pieces of water-glass to particle sizes of less than 2 mm,
d) treating the ground water-glass in an elongated reaction zone with mechanical circulation for 10 to 120 minutes at 600 to 800°C,
e) grinding the material leaving the reaction zone to a particle fineness of less than 1 mm.

2. The process as claimed in claim 1, wherein 2 to 30 % by weight, based on the amount of material leaving the reaction zone, of reaction product having a particle fineness of less than 1 mm is added to the ground water-glass.

3. The process as claimed in claim 1 or 2, wherein the ground water-glass is treated in the reaction zone for 45 to 90 minutes.

4. The process as claimed in at least one of claims 1 to 3, wherein the ground water-glass is treated in the reaction zone at temperatures of 700 to 760°C.

## Revendications

1. Procédé de préparation de silicates de sodium cristallins à structure feuilletée de formule Na₂SiₓO₂ₓ₊₁, x étant 2 ou 3, qui comprend les étapes :
a) fondre du sable et du carbonate de sodium en proportion molaire de 2 à 3,5 à des températures de 1 200 à 1 400°C,
b) refroidir la masse fondue en formant du silicate de sodium en morceaux,
c) broyer le silicate de sodium en morceaux à des granulométries inférieures à 2 mm,
d) traiter le silicate de sodium broyé dans une zone de réaction allongée sous mélange mécanique pendant 10 à 120 min entre 600 et 800°C,
e) broyer le matériau sortant de la zone de réaction à une finesse inférieure à 1 mm.

2. Procédé selon la revendication 1, caractérisé en ce qu'on ajoute au silicate de sodium broyé 2 à 30 % en poids, rapporté à la quantité du matériau quittant la zone de réaction, de produit de réaction ayant une finesse inférieure à 1 mm.

3. Procédé selon la revendication 1 ou 2, caractérisé en ce qu'on traite le silicate de sodium broyé dans la zone de réaction pendant 45 à 90 min.

4. Procédé selon au moins l'une des revendications 1 à 3, caractérisé en ce qu'on traite le silicate de sodium broyé dans la zone de réaction à des températures comprises entre 700 et 760°C.
